# EUROPÄISCHE PATENTANMELDUNG

(11) **EP 3 599 349 A1**
(43) Veröffentlichungstag der Anmeldung: **29.01.2020**
(21) Anmeldenummer: 19187741.4
(22) Anmeldetag: 23.07.2019
(51) Int. Cl.: F01D 17/16, F04D 29/56

(54) **STRUKTURBAUGRUPPE MIT GENEIGTEN VERSTELLBAREN LEITSCHAUFELN FÜR EINEN VERDICHTER EINER STRÖMUNGSMASCHINE**

(30) Priorität: 24.07.2018 DE 102018117884
(71) Anmelder: Rolls-Royce Deutschland Ltd & Co KG, 15827 Blankenfelde-Mahlow (DE)
(72) Erfinder: HEINICHEN, Frank, 15827 Blankenfelde-Mahlow (DE); CIVELEK, Ali Can, 15827 Blankenfelde-Mahlow (DE)
(74) Vertreter: Müller, Wolfram Hubertus

(57) **Zusammenfassung**

Die Erfindung betrifft eine Strukturbaugruppe für einen Verdichter einer Strömungsmaschine, die aufweist: einen Stator (5) mit einer Mehrzahl von Leitschaufeln (50), die sich in einem Strömungspfad (25) der Strömungsmaschine erstrecken, wobei die Leitschaufeln (50) eine Drechachse (70) aufweisen und in ihrem Staffelungswinkel einstellbar ausgebildet sind; eine innere Strömungspfadberandung (950), die den Strömungspfad (25) durch die Strömungsmaschine radial innen begrenzt; und eine äußere Strömungspfadberandung (410), die den Strömungspfad (25) durch die Strömungsmaschine radial außen begrenzt. Dabei weisen die Leitschaufeln (50) erste Teilspalte (81) zur äußeren Strömungspfadberandung (410) und/oder zweite Teilspalte (82) zur inneren Strömungspfadberandung (950) auf. Es ist vorgesehen, dass die Leitschaufeln (50) derart angeordnet und ausgebildet sind, dass die Drehachsen (70) der Leitschaufeln (50) eine kombinierte Neigung sowohl zur Axialrichtung als auch in Umfangsrichtung aufweisen.

## Beschreibung

Die Erfindung betrifft eine Strukturbaugruppe für einen Verdichter einer Strömungsmaschine gemäß dem Oberbegriff des Patentanspruchs 1.

Verdichter von Flugtriebwerken werden für eine bestimmte Auslegungsdrehzahl ausgelegt. Im Teillastbereich, d.h. bei Drehzahlen kleiner als der Auslegungsdrehzahl besteht die Gefahr lokaler Strömungsablösungen an den Rotorschaufeln des Verdichtergitters. Zur Erweiterung des stabilen Arbeitsbereiches ist es bekannt, in mehrstufigen Axialverdichtern Statoren mit variablen Staffelungswinkeln einzusetzen. Um eine ausreichende Betriebssicherheit herzustellen, ist weiter es bekannt, solche variablen Statoren mit Teilspalten auszubilden, die zwischen dem Schaufelblatt und der angrenzenden Strömungspfadberandung verlaufen. Solche Teilspalte werden auch als "cut-back" oder "clipping" bezeichnet. Allerdings führt die resultierende Spaltströmung zu Strömungsverlusten, welche einen negativen Einfluss auf den Wirkungsgrad des Verdichters haben und zu erhöhten Vibrationsamplituden an stromabwärts angeordneten Rotoren führen können.

Der vorliegenden Erfindung liegt die Aufgabe zu Grunde, eine Strukturbaugruppe für einen Verdichter einer Strömungsmaschine mit verbesserten aerodynamischen Eigenschaften bereitzustellen.

Diese Aufgabe wird durch eine Strukturbaugruppe mit den Merkmalen des Anspruchs 1 gelöst. Ausgestaltungen der Erfindung sind in den abhängigen Ansprüchen angegeben.

Danach betrachtet die Erfindung eine Strukturbaugruppe für einen Verdichter einer Strömungsmaschine, die einen Stator mit einer Mehrzahl von Leitschaufeln aufweist, die sich in einem Strömungspfad der Strömungsmaschine erstrecken, wobei die Leitschaufeln jeweils eine Drehachse aufweisen und in ihrem Staffelungswinkel einstellbar ausgebildet sind. Die Strukturbaugruppe umfasst eine innere Strömungspfadberandung, die den Strömungspfad durch die Strömungsmaschine radial innen begrenzt, und eine äußere Strömungspfadberandung, die den Strömungspfad durch die Strömungsmaschine radial außen begrenzt. Dabei bilden die Leitschaufeln erste Teilspalte zur äußeren Strömungspfadberandung und/oder zweite Teilspalte zur inneren Strömungspfadberandung auf.

Die radial innere Strömungspfadberandung wird beispielsweise durch eine Nabe des Verdichters und die äußere Strömungspfadberandung durch ein Verdichtergehäuse bereitgestellt. Es wird darauf hingewiesen, dass die Teilspalte aufgrund der Drehbarkeit der Leitschaufeln notwendigerweise angrenzend an die Strömungspfadberandung ausgebildet sind und ihre Existenz eine Drehung bzw. Änderung des Staffelungswinkels erst ermöglicht, da ohne solche Teilspalte bei Änderung des Staffelungswinkels ein Kontakt bzw. Zusammenstoß mit der Strömungspfadberandung erfolgen würde. Je stärker die Strömungspfadberandung sich dabei im Bereich des Stators lokal verändert (in axialer Richtung und/oder in Umfangsrichtung), beispielsweise wegen einer fallenden inneren Annuluskontur, desto stärker sind die Teilspalte auszubilden.

Die Spalte werden als Teilspalte bezeichnet, da sie sich nicht über die gesamte axiale Länge der Leitschaufeln erstrecken, sondern nur über eine Teillänge.

Die Erfindung sieht vor, dass die Leitschaufeln derart angeordnet und ausgebildet sind, dass die Drehachsen der Leitschaufeln eine kombinierte Neigung sowohl zur Axialrichtung als auch in Umfangsrichtung aufweisen. Durch eine kombinierte Neigung der Stator-Drehachse sowohl zur Axialrichtung als auch in Umfangsrichtung wird es ermöglicht, die Teilspalte zur angrenzenden Strömungspfadberandung zumindest in einem Teilbereich der einstellbaren Staffelungswinkel eng zu wählen und zu minimieren. So werden mit der Neigung der Drehachsen in Umfangsrichtung und mit der Neigung der Drehachsen zur axialen Richtung zwei Auslegungsparameter bereitgestellt, die es erlauben, zumindest abschnittsweise den Abstand zur angrenzenden Strömungspfadberandung gering zu halten. Auf diese Weise können Verbesserungen in Wirkungsgrad, Stabilität und Vibrationslevel erreicht werden.

Es wird darauf hingewiesen, dass die Neigung der jeweiligen Drehachse der Leitschaufeln in der Strukturbaugruppe als Designparameter festgelegt und nicht variierbar ist. Variierbar ist allein der Staffelungswinkel. Die kombinierte Neigung der Drehachsen der Leitschaufeln sowohl zur axialen Richtung als auch in Umfangsrichtung ist also eine baulich festgelegte Neigung in der Strukturbaugruppe.

Die vorliegende Erfindung bewirkt dabei, dass die nach innen gerichteten Verlängerungen der Drehachsen der Leitschaufeln des Stators sich nicht in einem Punkt der Statorachse schneiden, wie es der Fall wäre, wenn sich die Drehachsen der Leitschaufeln des Stators alle exakt in der radialen Richtung (in einem zylindrischen Koordinatensystem) erstrecken würden. Stattdessen sind die Drehachsen der Leitschaufeln des Stators in Umfangsrichtung derart geneigt, dass ihre jeweiligen radial nach innen gerichteten Verlängerungen tangential an einem gedachten Kreis anliegen, der sich in einer Schnittebene senkrecht zur Statorachse um die Statorachse erstreckt.

Die genauen Kombinationen der beiden Neigungsparameter sind abhängig von einer Vielzahl von Variablen. Dazu gehören der Annulus-Neigungswinkel (d. h. die Abweichung des Verlaufs des durch die radial innere Strömungspfadberandung und die radial äußere Strömungspfadberandung gebildeten Ringraums von einem Verlauf exakt in axialer Richtung), die Annulus-Krümmung in Umfangsrichtung und der Verstellbereich des variablen Stators.

Eine Ausgestaltung der Erfindung sieht vor, dass die Neigung der Drehachsen der Leitschaufeln sowohl zur Axialrichtung als auch in Umfangsrichtung dahingehend optimiert ist, dass ein vorgegebener Minimalspalt bei allen einstellbaren Staffelungswinkeln, also über den gesamten Verstellbereich hinweg, beim ersten Teilspalt und/oder beim zweiten Teilspalt nicht unterschritten wird. Gemäß einer Ausgestaltung gilt dies sowohl für den ersten Teilspalt als auch für den zweiten Teilspalt, d. h ein erster radial äußerer Minimalspalt wird im Hinblick auf den ersten Teilspalt und ein zweiter radial innerer Minimalspalt im Hinblick auf den zweiten Teilspalt nicht unterschritten. Hierzu folgt die Neigung der Drehachsen einem vorgegebenen Satz an Auslegungsregeln, der beispielsweise über ein Optimierungsprogramm bereitgestellt werden kann.

Dabei kann vorgesehen sein, dass die Neigung der Drehachsen dahingehend optimiert ist, dass über den gesamten Verstellbereich hinweg der erste Teilspalt und/oder der zweite Teilspalt einen Minimalabstand zur angrenzenden Strömungspfadberandung einhält, sich also bei Änderung des Staffelungswinkels nicht oder nur unwesentlich verändert.

In Ausführungsbeispielen kann vorgesehen sein, dass die Drehachsen in positiver Richtung in Umfangsrichtung geneigt sind, wobei als positive Richtung bei einer Ansicht von vorne der Uhrzeigersinn definiert ist. Alternativ können die Drehachsen in negativer Richtung (entgegen der Umfangsrichtung) geneigt sein. Die Formulierung "in Umfangsrichtung geneigt" ist dahingehend zu verstehen, dass sie beide Varianten umfasst. Die Neigungen in Umfangsrichtung können somit entgegen oder mit der Drehrichtung des stromabwärts des Stators angeordneten Rotors erfolgen. Dabei sind die Drehachsen beispielsweise um einen Verkippungswinkel im Bereich zwischen 0° und ± 10° in Umfangsrichtung bzw. entgegen der Umfangsrichtung verkippt, weichen also um diesen Winkel von einer exakt radialen Erstreckung ab.

In weiteren Ausführungsbeispielen kann vorgesehen sein, dass die Drehachsen stromaufwärts zur axialen Richtung geneigt sind. Alternativ können die Drehachsen stromabwärts zur axialen Richtung geneigt sein. Die axiale Richtung ist dabei definiert als die Richtung, die vom Triebwerkseingang zum Triebwerksausgang zeigt. Dass die Drehachse einer Leitschaufel stromaufwärts zur axialen Richtung geneigt ist, bedeutet, dass die Drehachse entgegen der axialen Richtung stromaufwärts geneigt ist und dabei einen Winkel kleiner als 90° mit der Statorachse bzw. der Maschinenachse des Triebwerks einschließt. Dass die Drehachse einer Leitschaufel stromabwärts zur axialen Richtung geneigt ist, bedeutet, dass die Drehachse in axialer Richtung stromabwärts geneigt ist und dabei einen Winkel kleiner als 90° mit der Drehachse der Leitschaufel bzw. der Maschinenachse des Triebwerks einschließt.

Beispielsweise sind die Drehachsen um einen Verkippungswinkel im Bereich zwischen 0° und ± 10° zur axialen Richtung verkippt. Der Verkippungswinkel ist dabei im Meridionalschnitt definiert als der Winkel zwischen der exakt radialen Richtung und der zur axialen Richtung geneigten Richtung der Drehachse.

Eine Ausgestaltung der Erfindung sieht vor, dass die Teilspalte im Bereich der Vorderkante und/oder im Bereich der Hinterkante der Leitschaufeln angrenzend an die jeweilige Strömungspfadberandung ausgebildet sind. Insbesondere kann vorgesehen sein, dass die Leitschaufeln im Bereich der Hinterkante angrenzend an die radial äußere Strömungspfadberandung und/oder angrenzend an die radial innere Strömungspfadberandung einen Rückschnitt derart aufweisen, dass sie im Bereich der Hinterkante einen Teilspalt zur angrenzenden Strömungspfadberandung ausbilden. Teilspalte sind bei dieser Ausgestaltung somit im Bereich der Hinterkante ausgebildet.

Zusätzlich oder alternativ ist es jedoch auch möglich, dass die Teilspalte im Bereich der Vorderkante ausgebildet sind, d. h. dass die Leitschaufeln im Bereich der Vorderkante angrenzend an die radial äußere Strömungspfadberandung und/oder angrenzend an die radial innere Strömungspfadberandung einen Rückschnitt derart aufweisen, dass sie im Bereich der Vorderkante einen Teilspalt zur angrenzenden Strömungspfadberandung ausbilden.

Eine Ausführungsvariante hierzu sieht vor, dass die Drehachsen der Leitschaufeln des Stators zur Axialrichtung und in Umfangsrichtung kombiniert derart geneigt sind, dass ein oberer Eckpunkt und/oder ein unterer Eckpunkt bei einer Verstellung des Staffelungswinkels über den hierfür möglichen Bereich eine Kreistrajektorie beschreiben, die lokal senkrecht zur angrenzenden Strömungspfadberandung ausgerichtet ist. Der obere Eckpunkt ist dabei definiert als Punkt, an dem die Vorderkante und der Rückschnitt an der Schaufelspitze oder die Hinterkante und der Rückschnitt an der Schaufelspitze zusammenlaufen. Der untere Eckpunkt ist definiert als Punkt, an dem die Vorderkante und der Rückschnitt am Schaufelfuß oder die Hinterkante und Rückschnitt am Schaufelfuß zusammenlaufen. Es handelt sich somit um die oberen und/oder unteren Eckpunkte an Vorderkante und/oder Hinterkante der Leitschaufeln, wobei wie ausgeführt Teilspalte in Ausführungsvarianten der Erfindung nur im Bereich der Hinterkante ausgebildet sind und für diesen Fall naturgemäß auch die entsprechenden Eckpunkte nur an der Hinterkante ausgebildet sind.

Durch Ausrichtung der Drehachsen derart, dass die Trajektorie mindestens eines Eckpunkts jeweils lokal senkrecht zur angrenzenden Strömungspfadberandung ausgerichtet ist, weist die Kreistrajektorie bei jeder Einstellung des Staffelungswinkels einen im Wesentlichen konstanten Abstand zu angrenzenden Strömungspfadberandung auf. Dadurch wird erreicht, dass der Abstand eines Eckpunkts zur angrenzenden Strömungspfadberandung bei jedem eingestellten Staffelungswinkel im Wesentlichen konstant ist.

Gemäß einem Ausführungsbeispiel der Erfindung kann vorgesehen sein, dass die Leitschaufeln zur Bereitstellung einer Drehbarkeit zwecks Einstellung des Staffelungswinkels derart strukturell ausgebildet sind, dass sie mit einer Spindel drehfest verbunden oder einstückig mit einer solchen ausgebildet sind. Dabei kann vorgesehen sein, dass die Leitschaufeln an ihrem radial äußeren Ende jeweils mit einer äußeren kreisförmigen Plattform, die auch als Drehteller bezeichnet wird, verbunden sind, die über die Spindel in der radial äußeren Strömungspfadberandung angeordnet ist. Die Befestigung in der radial äußeren Strömungspfadberandung erfolgt beispielsweise über ein Gehäusedeckband.

Des Weiteren kann vorgesehen sein, dass die Leitschaufel an ihrem radial inneren Ende jeweils mit einer inneren kreisförmigen Plattform verbunden sind, die über die Spindel in der radial inneren Strömungspfadberandung angeordnet ist. Die Befestigung an der radial inneren Strömungspfadberandung erfolgt beispielsweise über ein inneres Deckband, das in der radial inneren Strömungspfadberandung angeordnet ist. Alternativ kann vorgesehen sein, dass die Leitschaufeln an ihrem radial inneren Ende ohne Deckband ausgebildet sind, für welchen Fall sie über ihre gesamte Länge einen Spalt zur inneren Strömungspfadberandung ausbilden (auch als "Cantilever"-Ausbildung bezeichnet).

In einem weiteren Erfindungsaspekt betrifft die Erfindung ein Gasturbinentriebwerk, insbesondere für ein Luftfahrzeug, mit einer erfindungsgemäßen Strukturbaugruppe. Dabei kann vorgesehen sein, dass das Gasturbinentriebwerk aufweist:
- einen Triebwerkskern, der eine Turbine, einen Verdichter mit einer erfindungsgemäßen Strukturbaugruppe und eine die Turbine mit dem Verdichter verbindende, als Hohlwelle ausgebildete Turbinenwelle umfasst;
- einen Fan, der stromaufwärts des Triebwerkskerns positioniert ist, wobei der Fan mehrere Fanschaufeln umfasst; und
- ein Getriebe, das einen Eingang von der Turbinenwelle empfängt und Antrieb für den Fan zum Antreiben des Fans mit einer niedrigeren Drehzahl als die Turbinenwelle abgibt.

Eine Ausgestaltung hierzu kann vorsehen, dass
- die Turbine eine erste Turbine ist, der Verdichter ein erster Verdichter ist und die Turbinenwelle eine erste Turbinenwelle ist;
- der Triebwerkskern ferner eine zweite Turbine, einen zweiten Verdichter und eine zweite Turbinenwelle, die die zweite Turbine mit dem zweiten Verdichter verbindet, umfasst; und
- die zweite Turbine, der zweite Verdichter und die zweite Turbinenwelle dahingehend angeordnet sind, sich mit einer höheren Drehzahl als die erste Turbinenwelle zu drehen.

Es wird darauf hingewiesen, dass die vorliegende Erfindung, soweit sie sich auf ein Flugtriebwerk bezieht, bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse eines Gasturbinentriebwerks, in dem die Strukturbaugruppe angeordnet ist. Von der x-Achse ausgehend zeigt die radiale Richtung radial nach außen. Begriffe wie "vor", "hinter", "vordere" und "hintere" beziehen sich auf die axiale Richtung bzw. die Strömungsrichtung im Triebwerk. Begriffe wie "äußere" oder "innere" beziehen sich auf die radiale Richtung.

Wie hier an anderer Stelle angeführt wird, kann sich die vorliegende Offenbarung auf ein Gasturbinentriebwerk beziehen. Solch ein Gasturbinentriebwerk kann einen Triebwerkskern umfassen, der eine Turbine, einen Brennraum, einen Verdichter und eine die Turbine mit dem Verdichter verbindende Kernwelle umfasst. Solch ein Gasturbinentriebwerk kann ein Gebläse (mit Gebläseschaufeln) umfassen, das stromaufwärts des Triebwerkskerns positioniert ist.

Anordnungen der vorliegenden Offenbarung können insbesondere, jedoch nicht ausschließlich, für Gebläse, die über ein Getriebe angetrieben werden, von Vorteil sein. Entsprechend kann das Gasturbinentriebwerk ein Getriebe umfassen, das einen Eingang von der Kernwelle empfängt und Antrieb für das Gebläse zum Antreiben des Gebläses mit einer niedrigeren Drehzahl als die Kernwelle abgibt. Der Eingang für das Getriebe kann direkt von der Kernwelle oder indirekt von der Kernwelle, beispielsweise über eine Stirnwelle und/oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich das Gebläse mit einer niedrigeren Drehzahl dreht).

Das Gasturbinentriebwerk, das hier beschrieben und/oder beansprucht wird, kann eine beliebige geeignete allgemeine Architektur aufweisen. Beispielsweise kann das Gasturbinentriebwerk eine beliebige gewünschte Anzahl an Wellen, die Turbinen und Verdichter verbinden, beispielsweise eine, zwei oder drei Wellen, aufweisen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Der Triebwerkskern kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei solch einer Anordnung kann der zweite Verdichter axial stromabwärts des ersten Verdichters positioniert sein. Der zweite Verdichter kann dahingehend angeordnet sein, Strömung von dem ersten Verdichter aufzunehmen (beispielsweise direkt aufzunehmen, beispielsweise über einen allgemein ringförmigen Kanal).

Das Getriebe kann dahingehend angeordnet sein, von der Kernwelle, die dazu konfiguriert ist, sich (beispielsweise im Gebrauch) mit der niedrigsten Drehzahl zu drehen, (beispielsweise die erste Kernwelle in dem obigen Beispiel) angetrieben zu werden. Beispielsweise kann das Getriebe dahingehend angeordnet sein, lediglich von der Kernwelle, die dazu konfiguriert ist, sich (beispielsweise im Gebrauch) mit der niedrigsten Drehzahl zu drehen, (beispielsweise nur von der ersten Kernwelle und nicht der zweiten Kernwelle bei dem obigen Beispiel) angetrieben zu werden. Alternativ dazu kann das Getriebe dahingehend angeordnet sein, von einer oder mehreren Wellen, beispielsweise der ersten und/oder der zweiten Welle in dem obigen Beispiel, angetrieben zu werden.

Bei einem Gasturbinentriebwerk, das hier beschrieben und/oder beansprucht wird, kann ein Brennraum axial stromabwärts des Gebläses und des Verdichters (der Verdichter) vorgesehen sein. Beispielsweise kann der Brennraum direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Der Brennraum kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln, bei denen es sich um variable Statorschaufeln (dahingehend, dass ihr Anstellwinkel variabel sein kann) handeln kann, umfassen. Die Reihe von Rotorschaufeln und die Reihe von Statorschaufeln können axial voneinander versetzt sein. Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial voneinander versetzt sein.

Jede Gebläseschaufel kann mit einer radialen Spannweite definiert sein, die sich von einem Fuß (oder einer Nabe) an einer radial innenliegenden von Gas überströmten Stelle oder an einer Position einer Spannbreite von 0 % zu einer Spitze an einer Position einer Spannbreite von 100 % erstreckt. Das Verhältnis des Radius der Gebläseschaufel an der Nabe zu dem Radius der Gebläseschaufel an der Spitze kann weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Gebläseschaufel an der Nabe zu dem Radius der Gebläseschaufel an der Spitze kann in einem einschließenden Bereich liegen, der von zwei der Werte im vorhergehenden Satz begrenzt wird (d. h. die Werte können obere oder untere Grenzen bilden). Diese Verhältnisse können allgemeinhin als das Nabe-Spitze-Verhältnis bezeichnet werden. Der Radius an der Nabe und der Radius an der Spitze können beide an dem vorderen Randteil (oder dem axial am weitesten vorne liegenden Rand) der Schaufel gemessen werden. Das Nabe-Spitze-Verhältnis bezieht sich natürlich auf den von Gas überströmten Abschnitt der Gebläseschaufel, d. h. den Abschnitt, der sich radial außerhalb jeglicher Plattform befindet.

Der Radius des Gebläses kann zwischen der Mittellinie des Triebwerks und der Spitze der Gebläseschaufel an ihrem vorderen Rand gemessen werden. Der Durchmesser des Gebläses (der einfach das Doppelte des Radius des Gebläses sein kann) kann größer als (oder in der Größenordnung von): 250 cm (etwa 100 Inch), 260 cm, 270 cm (etwa 105 Inch), 280 cm (etwa 110 Inch), 290 cm (etwa 115 Inch), 300 cm (etwa 120 Inch), 310 cm, 320 cm (etwa 125 Inch), 330 cm (etwa 130 Inch), 340 cm (etwa 135 Inch), 350 cm, 360 cm (etwa 140 Inch), 370 cm (etwa 145 Inch), 380 cm (etwa 150 Inch) oder 390 cm (etwa 155 Inch) sein (liegen). Der Gebläsedurchmesser kann in einem einschließenden Bereich liegen, der von zwei der Werte im vorhergehenden Satz begrenzt wird (d. h. die Werte können obere oder untere Grenzen bilden).

Die Drehzahl des Gebläses kann im Gebrauch variieren. Allgemein ist die Drehzahl geringer für Gebläse mit einem größeren Durchmesser. Lediglich als ein nicht einschränkendes Beispiel kann die Drehzahl des Gebläses bei Konstantgeschwindigkeitsbedingungen weniger als 2500 U/min, beispielsweise weniger als 2300 U/min, betragen. Lediglich als ein weiteres nicht einschränkendes Beispiel kann auch die Drehzahl des Gebläses bei Konstantgeschwindigkeitsbedingungen für ein Triebwerk mit einem Gebläsedurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres nicht einschränkendes Beispiel kann die Drehzahl des Gebläses bei Konstantgeschwindigkeitsbedingungen für ein Triebwerk mit einem Gebläsedurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich das Gebläse (mit zugehörigen Gebläseschaufeln) um eine Drehachse. Diese Drehung führt dazu, dass sich die Spitze der Gebläseschaufel mit einer Geschwindigkeit U_{Spitze} bewegt. Die von den Gebläseschaufeln an der Strömung verrichtete Arbeit resultiert in einem Anstieg der Enthalpie dH der Strömung. Eine Gebläsespitzenbelastung kann als dH/U_{Spitze}² definiert werden, wobei dH der Enthalpieanstieg (beispielsweise der durchschnittliche 1-D-Enthalpieanstieg) über das Gebläse hinweg ist und U_{Spitze} die (Translations-) Geschwindigkeit der Gebläsespitze, beispielsweise an dem vorderen Rand der Spitze, ist (die als Gebläsespitzenradius am vorderen Rand multipliziert mit der Winkelgeschwindigkeit definiert werden kann). Die Gebläsespitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt Jkg⁻¹K⁻¹/(ms⁻¹)² sind). Die Gebläsespitzenbelastung kann in einem einschließenden Bereich liegen, der von zwei der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem einschließenden Bereich liegen, der von zwei der Werte im vorhergehenden Satz begrenzt wird (d. h. die Werte können obere oder untere Grenzen bilden). Der Bypasskanal kann im Wesentlichen ringförmig sein. Der Bypasskanal kann sich radial außerhalb des Triebwerkskerns befinden. Die radial äußere Fläche des Bypasskanals kann durch eine Triebwerksgondel und/oder ein Gebläsegehäuse definiert werden.

Das Gesamtdruckverhältnis eines Gasturbinentriebwerks, das hier beschrieben und/oder beansprucht wird, kann als das Verhältnis des Staudrucks stromaufwärts des Gebläses zu dem Staudruck am Ausgang des Höchstdruckverdichters (vor dem Eingang in den Brennraum) definiert werden. Als ein nicht einschränkendes Beispiel kann das Gesamtdruckverhältnis eines Gasturbinentriebwerks, das hier beschrieben und/oder beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem einschließenden Bereich liegen, der von zwei der Werte im vorhergehenden Satz begrenzt wird (d. h. die Werte können obere oder untere Grenzen bilden).

Der spezifische Schub eines Triebwerks kann als der Nettoschub des Triebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 Nkg⁻¹s, 105 Nkg⁻¹s, 100 Nkg⁻¹s, 95 Nkg⁻¹s, 90 Nkg⁻¹s, 85 Nkg⁻¹s oder 80 Nkg⁻¹s betragen (liegen). Der spezifische Schub kann in einem einschließenden Bereich liegen, der von zwei der Werte im vorhergehenden Satz begrenzt wird (d. h. die Werte können obere oder untere Grenzen bilden). Solche Triebwerke können im Vergleich zu herkömmlichen Gasturbinentriebwerken besonders effizient sein.

Ein Gasturbinentriebwerk, das hier beschrieben und/oder beansprucht wird, kann einen beliebigen gewünschten Höchstschub aufweisen. Lediglich als ein nicht einschränkendes Beispiel kann eine Gasturbine, die hier beschrieben und/oder beansprucht wird, zur Erzeugung eines Höchstschubs von mindestens (oder in der Größenordnung von): 160kN, 170kN, 180kN, 190kN, 200kN, 250kN, 300kN, 350kN, 400kN, 450kN, 500kN oder 550kN in der Lage sein. Der Höchstschub kann in einem einschließenden Bereich liegen, der von zwei der Werte im vorhergehenden Satz begrenzt wird (d. h. die Werte können obere oder untere Grenzen bilden). Der Schub, auf den oben Bezug genommen wird, kann der Nettohöchstschub bei standardmäßigen atmosphärischen Bedingungen auf Meereshöhe plus 15 Grad C (Umgebungsdruck 101,3 kPa, Temperatur 30 Grad C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zum Brennraum, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400K, 1450K, 1500K, 1550K, 1600K oder 1650K betragen (liegen). Die TET bei Konstantgeschwindigkeit kann in einem einschließenden Bereich liegen, der von zwei der Werte im vorhergehenden Satz begrenzt wird (d. h. die Werte können obere oder untere Grenzen bilden). Die maximale TET im Gebrauch des Triebwerks kann beispielsweise mindestens (oder in der Größenordnung von): 1700K, 1750K, 1800K, 1850K, 1900K, 1950K oder 2000K betragen (liegen). Die maximale TET kann in einem einschließenden Bereich liegen, der von zwei der Werte im vorhergehenden Satz begrenzt wird (d. h. die Werte können obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Gebläseschaufel und/oder ein Blattabschnitt einer Gebläseschaufel, die hier beschrieben und/oder beansprucht wird, kann aus einem beliebigen geeigneten Material oder einer Kombination aus Materialien hergestellt werden. Beispielsweise kann zumindest ein Teil der Gebläseschaufel und/oder des Blatts zumindest zum Teil aus einem Verbundstoff, beispielsweise einem Metallmatrix-Verbundstoff und/oder einem Verbundstoff mit organischer Matrix, wie z. B. Kohlefaser, hergestellt werden. Als ein weiteres Beispiel kann zumindest ein Teil der Gebläseschaufel und/oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material hergestellt werden. Die Gebläseschaufel kann mindestens zwei Bereiche umfassen, die unter Verwendung verschiedener Materialien hergestellt werden. Beispielsweise kann die Gebläseschaufel einen vorderen Schutzrand aufweisen, der unter Verwendung eines Materials hergestellt wird, das dem Aufschlagen (beispielsweise von Vögeln, Eis oder anderem Material) besser widerstehen kann als der Rest der Schaufel. Solch ein vorderer Rand kann beispielsweise unter Verwendung von Titan oder einer auf Titan basierenden Legierung hergestellt werden. Somit kann die Gebläseschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Gebläse, das hier beschrieben und/oder beansprucht wird, kann einen mittleren Abschnitt umfassen, von dem sich die Gebläseschaufeln, beispielsweise in einer radialen Richtung, erstrecken können. Die Gebläseschaufeln können auf beliebige gewünschte Art und Weise an dem mittleren Abschnitt angebracht sein. Beispielsweise kann jede Gebläseschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Gebläseschaufel an der Nabe/Scheibe in einen entsprechenden Schlitz in der Nabe/Scheibe eingesteckt und/oder damit in Eingriff gebracht werden kann. Als ein weiteres Beispiel können die Gebläseschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Gebläseschaufeln aus einem Block maschinell herausgearbeitet werden und/oder mindestens ein Teil der Gebläseschaufeln kann durch Schweißen, wie z. B. lineares Reibschweißen, an der Nabe/Scheibe angebracht werden.

Die Gasturbinentriebwerke, die hier beschrieben und/oder beansprucht werden, können oder können nicht mit einer VAN (Variable Area Nozzle - Düse mit variablem Querschnitt) versehen sein. Solch eine Düse mit variablem Querschnitt kann eine Variation des Ausgangsquerschnitts des Bypasskanals im Gebrauch gestatten. Die allgemeinen Prinzipien der vorliegenden Offenbarung können auf Triebwerke mit oder ohne eine VAN zutreffen.

Das Gebläse einer Gasturbine, die hier beschrieben und/oder beansprucht wird, kann eine beliebige gewünschte Anzahl an Gebläseschaufeln, beispielsweise 16, 18, 20 oder 22 Gebläseschaufeln, aufweisen.

Gemäß der hier erfolgenden Verwendung können Konstantgeschwindigkeitsbedingungen Konstantgeschwindigkeitsbedingungen eines Luftfahrzeugs, an dem das Gasturbinentriebwerk angebracht ist, bedeuten. Solche Konstantgeschwindigkeitsbedingungen können herkömmlicherweise als die Bedingungen während des mittleren Teils des Flugs definiert werden, beispielsweise die Bedingungen, denen das Luftfahrzeug und/oder das Triebwerk zwischen (hinsichtlich Zeit und/oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantfahrtbedingung sein. Bei einigen Luftfahrzeugen können die Konstantfahrtbedingungen außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe, die im Bereich von 10.000 m bis 15.000 m, beispielsweise im Bereich von 10.000 m bis 12.000 m, beispielsweise im Bereich von 10.400 m bis 11.600 m (etwa 38.000 Fuß) beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegt, entsprechen. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 Grad C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Gebläsebetrieb ausgelegt ist, entsprechen. Dies kann beispielsweise die Bedingungen, bei denen das Gebläse (oder das Gasturbinentriebwerk) konstruktionsgemäß den optimalen Wirkungsgrad aufweist, bedeuten.

Im Gebrauch kann ein Gasturbinentriebwerk, das hier beschrieben und/oder beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise 2 oder 4) Gasturbinentriebwerk zur Bereitstellung von Schubkraft befestigt sein kann, bestimmt werden.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen.

Die Erfindung wird nachfolgend unter Bezugnahme auf die Figuren der Zeichnung anhand mehrerer Ausführungsbeispiele näher erläutert. Es zeigen:
- Figur 1: eine Seitenschnittansicht eines Gasturbinentriebwerks;
- Figur 2: eine Seitenschnittgroßansicht eines stromaufwärtigen Abschnitts eines Gasturbinentriebwerks;
- Figur 3: eine zum Teil weggeschnitte Ansicht eines Getriebes für ein Gasturbinentriebwerk;
- Figur 4: ein Leitschaufelgitter unter Darstellung des Staffelungswinkels der Leitschaufeln;
- Figur 5: schematisch eine Strukturbaugruppe, die ein Eintrittsleitrad mit verstellbarem Staffelungswinkel und Teilspalten zu den benachbarten Strömungspfadberandungen aufweist;
- Figur 6a-6c: in einer Ansicht von vorne, im Meridionalschnitt und in dreidimensionaler Ansicht eine Strukturbaugruppe entsprechend der Figur 5 unter Darstellung der Trajektorie der Hinterkanteneckpunkte bei Änderung des Staffelungswinkels;
- Figur 7: in einer Ansicht von vorne ein Ausführungsbeispiel einer Strukturbaugruppe, bei der die Drehachse der Leitschaufeln sowohl in axialer Richtung als auch in Umfangsrichtung geneigt angeordnet ist;
- Figur 8a: in schematischer Darstellung senkrecht zur Längsachse der Strukturbaugruppe die nach innen gerichteten Verlängerungen der Drehachsen der Leitschaufeln des Stators bei exakt radialer Ausrichtung der Drehachsen;
- Figur 8b: in schematischer Darstellung senkrecht zur Längsachse der Strukturbaugruppe die nach innen gerichteten Verlängerungen der Drehachsen der Leitschaufeln des Stators bei Neigung der Drehachsen in Umfangsrichtung, wobei die Verlängerungen der Drehachsen tangential an einem gedachten Kreis anliegen; und
- Figur 9: den Teilspalt in Abhängigkeit vom Staffelungswinkel für einen Stator mit exakt radial ausgerichteten Leitschaufeln und einen Stator mit Leitschaufeln, deren Drehachse kombiniert zur axialen Richtung und in Umfangsrichtung geneigt ist.

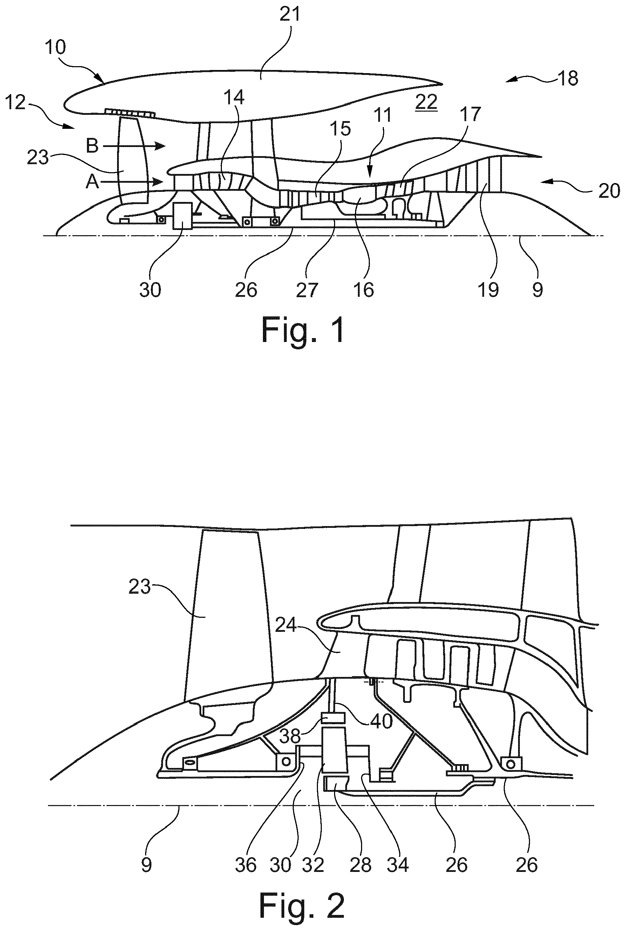

Figur 1 stellt ein Gasturbinentriebwerk 10 mit einer Hauptdrehachse 9 dar. Das Triebwerk 10 umfasst einen Lufteinlass 12 und ein Schubgebläse bzw. Fan 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Welle 26 und ein Epizykloidengetriebe 30 an der Niederdruckturbine 19 angebracht und wird durch diese angetrieben.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Das Gebläse 23 stellt allgemein den Hauptteil der Schubkraft bereit. Das Epizykloidengetriebe 30 ist ein Untersetzungsgetriebe.

Eine beispielhafte Anordnung für ein Getriebegebläse-Gasturbinentriebwerk 10 wird in Figur 2 gezeigt. Die Niederdruckturbine 19 (siehe Figur 1) treibt die Welle 26 an, die mit einem Sonnenrad 28 der Epizykloidengetriebeanordnung 30 gekoppelt ist. Mehrere Planetenräder 32, die durch einen Planetenträger 34 miteinander gekoppelt sind, befinden sich von dem Sonnenrad 28 radial außen und kämmen damit. Der Planetenträger 34 beschränkt die Planetenräder 32 darauf, synchron um das Sonnenrad 28 zu kreisen, während er ermöglicht, dass sich jedes Planetenrad 32 um seine eigene Achse drehen kann. Der Planetenträger 34 ist über Gestänge 36 mit dem Gebläse 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen- und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

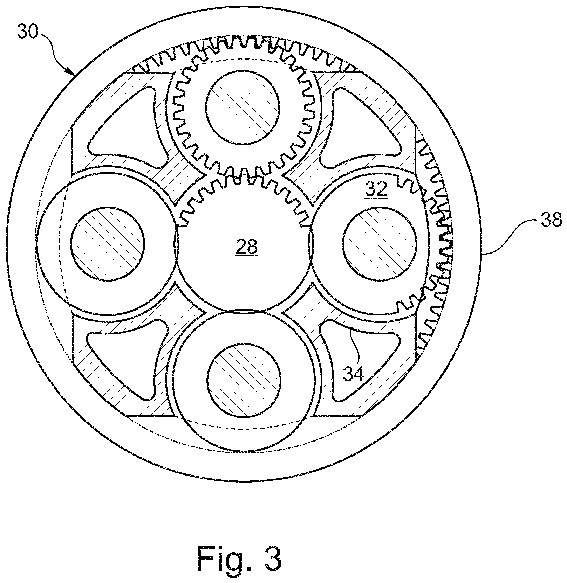

Das Epizykloidengetriebe 30 wird in Figur 3 beispielhaft genauer gezeigt. Das Sonnenrad 28, die Planetenräder 32 und das Hohlrad 38 umfassen jeweils Zähne um ihre Peripherie zum Kämmen mit den anderen Zahnrädern. Jedoch werden der Übersichtlichkeit halber lediglich beispielhafte Abschnitte der Zähne in Figur 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines Epizykloidengetriebes 30 umfassen allgemein mindestens drei Planetenräder 32.

Das in Figur 2 und 3 beispielhaft dargestellte Epizykloidengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Epizykloidengetriebe 30 verwendet werden. Als ein weiteres Beispiel kann das Epizykloidengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird das Gebläse 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Figur 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Triebwerk 10 und/oder zur Verbindung des Getriebes 30 mit dem Triebwerk 10 verwendet werden. Als ein weiteres Beispiel können die Verbindungen (z. B. die Gestänge 36, 40 in dem Beispiel von Figur 2) zwischen dem Getriebe 30 und anderen Teilen des Triebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Triebwerks (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Figur 2 beschränkt. Beispielsweise ist für den Fachmann ohne Weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Figur 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder planetenartig), Stützstrukturen, Eingangs- und Ausgangswellenanordnung und Lagerpositionierungen aus.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbogebläsetriebwerk bezieht, kann die Offenbarung beispielsweise bei einer beliebigen Art von Gasturbinentriebwerk, wie z. B. bei einem Open-Rotor- (bei dem die Gebläsestufe nicht von einer Triebwerksgondel umgeben wird) oder einem Turboprop-Triebwerk, angewendet werden. Bei einigen Anordnungen umfasst das Gasturbinentriebwerk 10 möglicherweise kein Getriebe 30.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

Im Kontext der vorliegenden Erfindung ist die Ausgestaltung von Statoren mit variablem Staffelungswinkel im Verdichter des Gasturbinentriebwerks von Bedeutung.

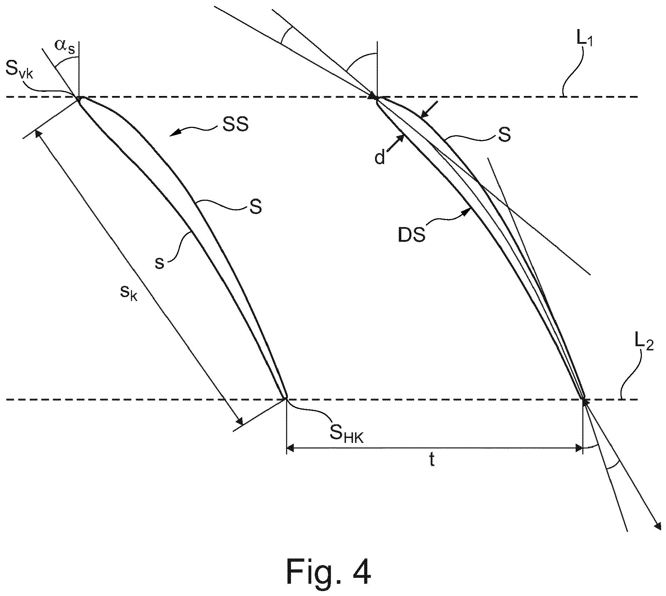

Zunächst wird dabei anhand der Figur 4 der grundlegende Aufbau eines Leitschaufelgitters eines Stators beschrieben und der Staffelungswinkel definiert. Das Leitschaufelgitter ist in üblicher Darstellung im Meridianschnitt und abgerollt dargestellt. Es umfasst eine Mehrzahl von Leitschaufeln S, die jeweils eine Vorderkante S_{VK} und eine Hinterkante S_{HK} aufweisen. Die Vorderkanten S_{VK} liegen auf einer gedachten Linie L₁, die Hinterkanten S_{HK} liegen auf einer gedachten Linie L₂. Die Linien L₁ und L2 verlaufen parallel. Die Leitschaufeln S umfassen des Weiteren jeweils eine Saugseite SS und eine Druckseite DS. Ihre maximale Profildicke ist mit d angegeben.

Das Leitschaufelgitter weist eine Gitterteilung t und eine Profilsehne s mit einer Profilsehnenlänge sₖ auf. Die Profilsehne s ist die Verbindungslinie zwischen der Vorderkante S_{VK} und der Hinterkante S_{HK} des Profils. Zwischen der Profilsehne s und der Senkrechten auf der Linie L₁ (wobei die Senkrechte zumindest näherungsweise der durch die Maschinenachse definierten Richtung entspricht) ist der Schaufel-Staffelungswinkel (im folgenden Staffelungswinkel) αₛ gebildet. Der Staffelungswinkel αₛ gibt die Neigung der Schaufeln S an.

Die Erfindung kann an jedem Stator mit variablem Staffelungswinkel realisiert sein. Nachfolgend wird die Erfindung anhand eines Ausführungsbeispiels erläutert, bei dem sie an einem Stator mit verstellbaren Leitschaufeln realisiert ist, der vor dem ersten Rotor eines Verdichters angeordnet ist. Ein solcher Stator wird als Eintrittsleitrad oder Vorleitrad bezeichnet (IGV - "Inlet Guide Vane"). Eintrittsleiträder mit variablem Staffelungswinkel verbessern den Arbeitsbereich eines Verdichters. Die Erfindung kann jedoch zusätzlich oder alternativ auch an jedem anderen Stator des Verdichters realisiert sein, der einen variablen Staffelungswinkel der Leitschaufeln aufweist.

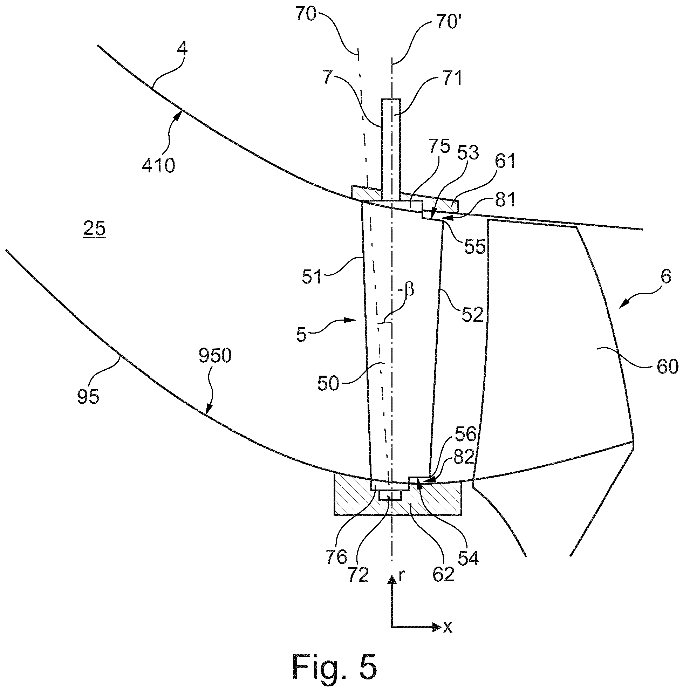

Bevor auf die eigentliche Erfindung eingegangen wird, wird anhand der Figur 5 zunächst der grundsätzliche Aufbau einer betrachteten Strukturbaugruppe erläutert.

Die Figur 5 zeigt in Schnittansicht eine Strukturbaugruppe, die einen Strömungspfad 25 definiert und ein Eintrittsleitrad 5, einen Rotor 6 einer Verdichterstufe eines Verdichters und Strömungspfadberandungen umfasst. Der Strömungspfad 25 leitet den Kernluftstrom A gemäß der Figur 1 durch das Kerntriebwerk.

Der Strömungspfad 25 wird radial innen durch eine Nabe 95 begrenzt, die eine innere Strömungspfadberandung 950 ausbildet. Radial außen wird der Strömungspfad 25 durch ein Verdichtergehäuse 4 begrenzt, dass eine radial äußere Strömungspfadberandung 410 ausbildet. Der Strömungskanal 25 ist als Ringraum ausgebildet. Das Eintrittsleitrad 5 weist im Staffelungswinkel verstellbare Statorschaufeln bzw. Leitschaufeln 50 auf, die in Umfangsrichtung verteilt im Strömungskanal 25 angeordnet sind. Die Leitschaufeln 50 weisen jeweils eine Vorderkante 51 und eine Hinterkante 52 auf.

Durch das Eintrittsleitrad 5 wird der Drall in der Strömung erhöht und dadurch der nachfolgende Rotor 6 in effektiverer Weise angestrebt. Der Rotor 6 umfasst eine Reihe von Rotorschaufeln bzw. Laufschaufeln 60, die sich im Strömungspfad 25 radial erstrecken.

Für eine Einstellbarkeit des Staffelungswinkels sind die Leitschaufeln 50 drehbar gelagert. Hierzu sind sie jeweils mit einer Spindel 7 drehfest verbunden oder integral mit einer solchen ausgebildet. Die Spindel 7 weist eine Drehachse 70' auf, die gleich der Drehachse der Leitschaufel 50 ist. Die Spindel 7 ist dabei von außerhalb des Strömungskanals 25 zugänglich und verstellbar.

Im Einzelnen ist vorgesehen, dass die Leitschaufel 50 an ihrem radial äußeren Ende mit einer äußeren kreisförmigen Plattform 75 verbunden ist, die einen Drehteller bildet und mit einem radial äußeren Spindelabschnitt 71 der Spindel 7 verbunden ist. Die Plattform 75 und der Spindelabschnitt 71 sind dabei in einem Gehäusedeckband 61 gelagert, das Teil des Verdichtergehäuse 4 ist. In entsprechender Weise ist die Leitschaufel 50 an ihrem radial inneren Ende mit einer inneren kreisförmigen Plattform 76 verbunden, die einen weiteren Drehteller bildet und mit einem radial inneren Spindelabschnitt 72 der Spindel 7 verbunden ist. Die Plattform 76 und der Spindelabschnitt 72 sind dabei in einem inneren Deckband 62 gelagert, das lokal die innere Strömungspfadberandung 950 bildet.

Um eine Drehbarkeit der Leitschaufeln 50 bzw. Einstellbarkeit des Staffelungswinkels zu ermöglichen, ist es erforderlich, dass die Leitschaufeln im Bereich ihrer Hinterkante 52 radial angrenzend an die äußere Strömungspfadberandung 410 und radial angrenzend an die innere Strömungspfadberandung 950 Rückschnitte 53, 54 ausbilden, die sicherstellen, dass die Leitschaufeln 50 in ihrem axial hinteren Bereich jeweils einen Teilspalt 81 zur radial äußeren Strömungspfadberandung 410 und einen Teilspalt 82 zur radial inneren Strömungspfadberandung 950 ausbilden. Hierdurch wird verhindert, dass bei einer Verstellung der Leitschaufel 50 durch Drehung um die Drehachse 70' diese mit der äußeren Strömungspfadberandung 410 und/oder mit der inneren Strömungspfadberandung 950 kollidiert.

Die Spalte 81, 82 werden dabei als Teilspalte bezeichnet, da sie sich nicht über die gesamte axiale Länge der Leitschaufeln 50 erstrecken.

Alternativ kann vorgesehen sein, dass die Leitschaufeln 50 an ihrem radial inneren Ende ohne Deckband ausgebildet sind, für welchen Fall sie frei schwebend unter Ausbildung eines durchgängigen Spaltes radial beanstandet zur inneren Strömungspfadberandung 95 enden. Auch kann alternativ vorgesehen sein, dass Teilspalte im Bereich der Vorderkante 51 oder sowohl im Bereich der Vorderkante 51 als auch im Bereich der Hinterkante 52 ausgebildet sind.

Erneut Bezug nehmend auf die Figur 5 verhält es sich des Weiteren so, dass die Leitschaufel 50 einen oberen Eckpunkt 55 der Hinterkante 52 und einen unteren Eckpunkte 56 der Hinterkante 52 ausbildet. Der obere Eckpunkt 55 ist definiert als der Punkt, an dem die Hinterkante 52 und der Rückschnitt 53 an der Schaufelspitze zusammenlaufen. Der untere Eckpunkt 56 ist definiert als der Punkt, an dem die Hinterkante 52 und der Rückschnitt 54 am Schaufelfuß zusammenlaufen.

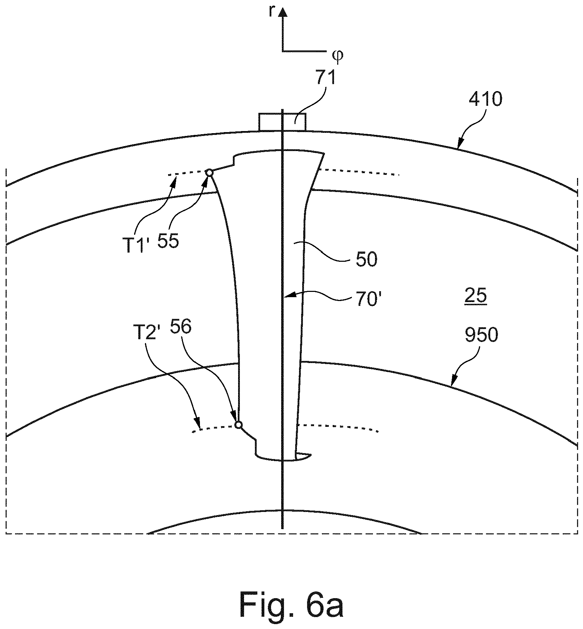

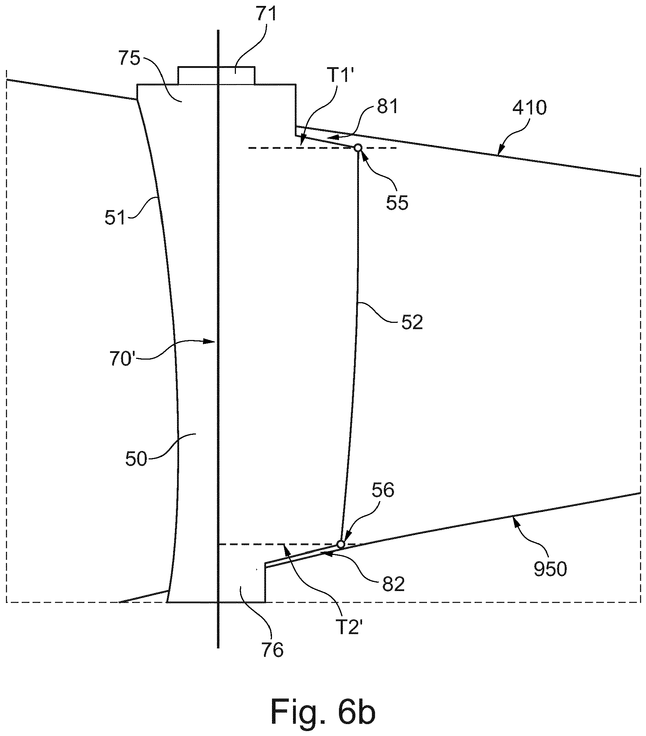

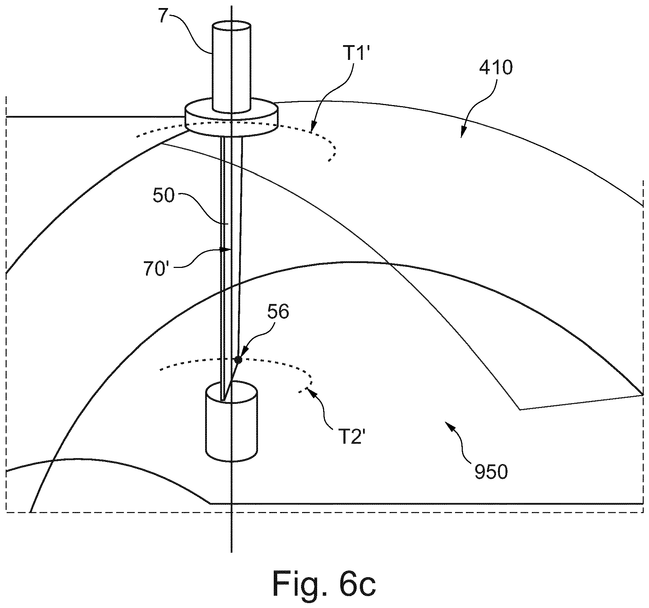

Die Figur 6a zeigt in einer Ansicht von vorne, die Figur 6b im Meridionalschnitt und die Figur 6c in einer perspektivischen Ansicht den Verlauf der Trajektorie der HinterkantenEckpunkte 55, 56 bei einer Verstellung des Staffelungswinkels. Dabei ist entsprechend dem Stand der Technik die Leitschaufel 50 in exakt radialer Ausrichtung im Strömungspfad 25 ausgerichtet, d.h. die Drehachse 70' verläuft in der radialen Richtung.

Der obere Eckpunkt 55 definiert bei Variation des Staffelungswinkels eine erste Trajektorie T1'. Der untere Eckpunkt 56 definiert bei Variation des Staffelungswinkels eine zweite Trajektorie T2'. Die aus der perspektivischen Darstellung der Figur 6c erkennbar ist, sind die Trajektorien T1', T2' kreisförmig. Dies folgt aus dem Umstand, dass eine Drehung der Eckpunkte 55, 56 um die Drehachse 70' erfolgt.

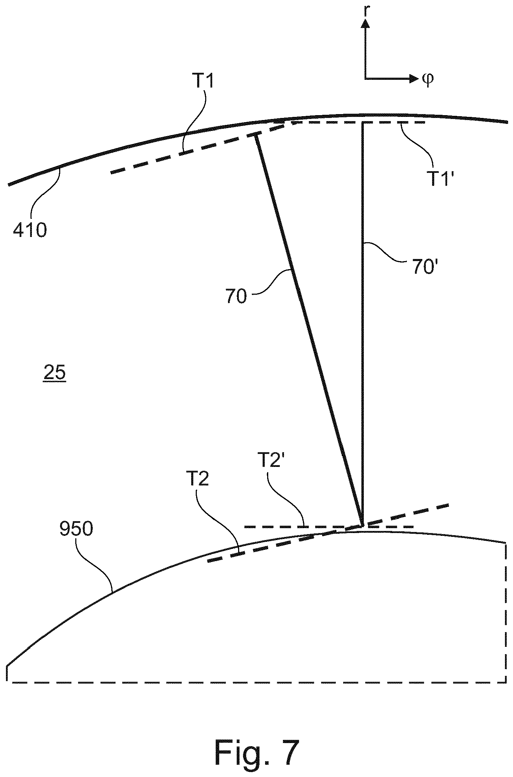

Die Figur 7 zeigt ein Ausführungsbeispiel der Erfindung in einer Ansicht von vorne, d. h. in einer Schnittebene senkrecht zur axialen Richtung bzw. Maschinenachse der Strukturbaugruppe. Dabei ist vorgesehen, dass die Leitschaufeln des Stators derart angeordnet und ausgebildet sind, dass ihre Drehachsen 70 eine kombinierte Neigung sowohl zur axialen Richtung als auch in Umfangsrichtung ϕ aufweisen. Aufgrund der Darstellung von vorne ist die Neigung in axialer Richtung in der Figur 7 nicht erkennbar. Um diese zu verdeutlichen, ist in der Figur 5 - ohne die entsprechende Leitschaufel - eine zur axialen Richtung geneigte Drehachse 70 dargestellt. Die Spindel 7, die kreisförmigen Plattformen 75, 76 und die Deckbänder 61, 62 sind entsprechend angepasst ausgebildet. Die Drehachse 70 ist im in der Figur 5 dargestellten Ausführungsbeispiel um den Winkel - β zur axialen Richtung hin gekippt, d. h. die Drehachse 70 nimmt den Winkel -β gegenüber der radialen Richtung r ein, wobei der Winkel β im Uhrzeigersinn positiv definiert ist. Zum besseren Vergleich mit dem Stand der Technik zeigt die Figur 7 sowohl die Trajektorien T1, T2, die sich bei entsprechend der vorliegenden Erfindung bei geneigter Drehachse 70 ergeben, wenn der obere Eckpunkt 55 und der untere Eckpunkt 56 um die Drehachse 70 gedreht werden, als auch die Trajektorien T1', T2', die sich bei entsprechend dem Stand der Technik in radialer Richtung verlaufender Drehachse 70' ergeben, wenn der obere Eckpunkt 55 und der untere Eckpunkt 56 um die Drehachse 70' gedreht werden.

Durch eine kombinierte Neigung der Drehachse 70 sowohl zur axialen Richtung als auch in Umfangsrichtung wird es möglich, die Teilspalte 81, 82 (vgl. Figur 5) enger zu wählen. Dabei ist insbesondere vorgesehen, dass die Drehachse 70 der geneigt angeordneten Leitschaufeln derart ausgerichtet ist, dass bei Verstellung des Staffelungswinkels die Kreistrajektorie T1, T2 lokal senkrecht zur angrenzenden Strömungspfadberandung 410, 950 ausgerichtet ist. Hierdurch ist der Abstand des jeweiligen Eckpunkts 55, 56 zur angrenzenden Strömungspfadberandung 410, 950 bei jedem eingestellten Staffelungswinkel im Wesentlichen konstant. Variationen der Strömungsbeeinflussung durch die Teilspalte 81, 82 in Abhängigkeit vom eingestellten Staffelungswinkel werden dadurch vermieden.

Es wird darauf hingewiesen, dass die Neigung in Umfangsrichtung (+ϕ) oder entgegen der Umfangsrichtung (-ϕ) vorliegend kann, wobei die Umfangsrichtung durch den Uhrzeigersinn definiert ist. Der Neigungswinkel liegt beispielsweise im Bereich zwischen 0 und ±10°.

Die Neigung in axialer Richtung kann stromaufwärts (-β) oder stromabwärts (+β) erfolgen, vgl. Figur 5, wobei der Winkel β zur exakt radialen Richtung r im Uhrzeigersinn positiv definiert ist. Auch hier liegt der Neigungswinkel beispielsweise im Bereich zwischen 0 und ±10°.

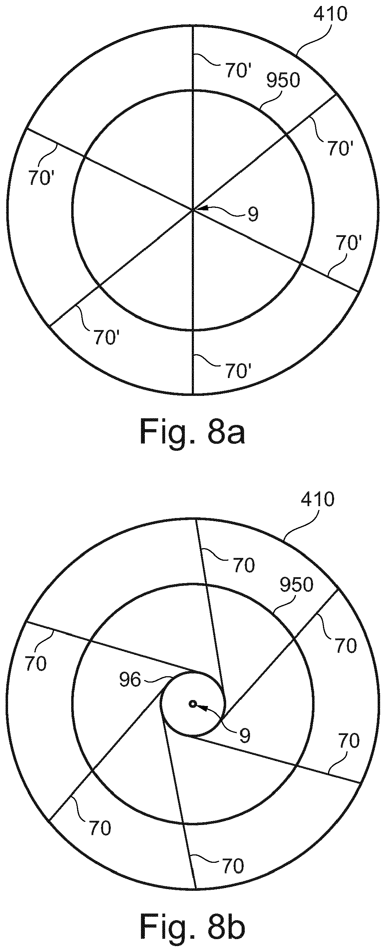

Die Figuren 8a und 8b verdeutlichen die unterschiedliche Ausrichtung der Drehachse 70, 70' der Leitschaufeln bei einer Anordnung gemäß dem Stand der Technik (Figur 8a) und bei einer erfindungsgemäßen Anordnung (Figur 8b). Bei einer Anordnung gemäß dem Stand der Technik, wenn die Drehachsen 70' in exakt radialer Richtung verlaufen, schneiden die radial nach innen gerichteten Verlängerungen der Drehachsen 70' sich in einem Punkt, der auf der Statorachse liegt, die identisch ist mit der Maschinenachse 9 des Flugtriebwerks, in dem die Strukturbaugruppe ausgebildet ist (vgl. Figuren 1 und 2). Mit anderen Worten fluchten die Drehachsen 70' radial nach innen auf einen Punkt zu.

Bei einer Neigung der Drehachsen 70 in Umfangsrichtung verhält es sich dagegen so, dass entsprechend der Figur 8b die radial nach innen gerichteten Verlängerungen der Drehachse 70 nicht auf einen Punkt fluchten, sondern tangential an einem gedachten Kreis 96 anliegen, der sich in einer Schnittebene senkrecht zur Statorachse bzw. Maschinenachse 9 kreisförmig um die Maschinenachse 9 erstreckt.

Dieser in der Figur 8b dargestellte Verlauf der Verlängerungen der Drehachse 70 beruht auf der Neigung der Drehachse 70 in Umfangsrichtung ϕ. Die ebenfalls vorhandene Neigung im Hinblick auf die axiale Richtung spielt insofern keine Rolle.

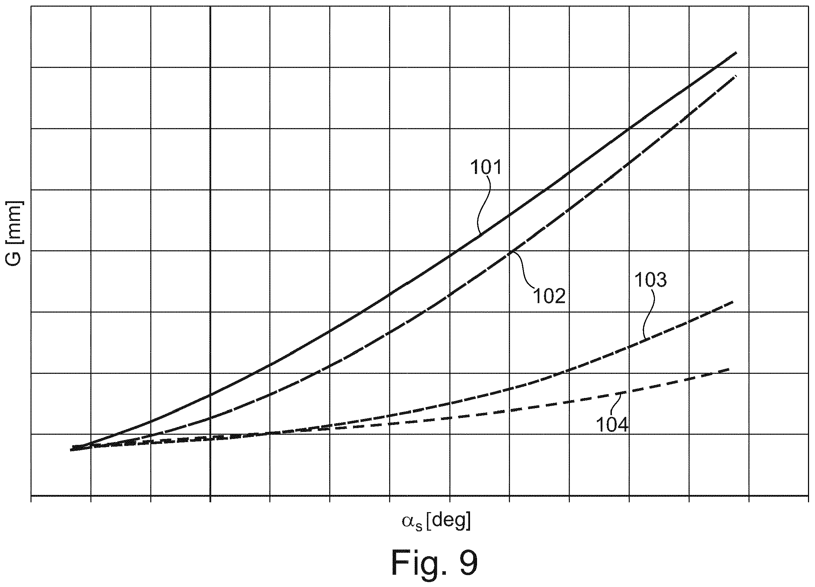

Die Figur 9 verdeutlicht die mit der erfindungsgemäßen Strukturbaugruppe einhergehenden Vorteile. In der Figur 9 ist die radiale Breite G der Teilspalte 81, 82 in Abhängigkeit von dem Staffelungswinkel αₛ dargestellt. Die Kurve 101 zeigt die Dicke des Teilspalts 82 an der radial inneren Strömungspfadberandung für Leitschaufeln, deren Drehachse ausschließlich in axialer Richtung geneigt ausgebildet ist. Die Kurve 102 zeigt die Dicke des Teilspalts an der radial inneren Strömungspfadberandung für Leitschaufeln, deren Drehachse kombiniert zur axialen Richtung und in Umfangsrichtung geneigt ausgebildet ist. Die Kurve 103 zeigt die Dicke des Teilspalt 81 an der radial äußeren Strömungspfadberandung für Leitschaufeln, deren Drehachse ausschließlich in axialer Richtung geneigt ausgebildet ist. Die Kurve 104 zeigt die Dicke des Teilspalts 81 an der radial äußeren Strömungspfadberandung für Leitschaufeln, deren Drehachse kombiniert in axialer Richtung und in Umfangsrichtung geneigt ausgebildet ist.

Es ist jeweils zu erkennen, dass bei einer Ausrichtung der Drehachse der Leitschaufeln mit einer kombinierten Neigung sowohl zur axialen Richtung als auch in Umfangsrichtung die auftretenden Teilspalte reduziert werden. Die damit einhergehende reduzierte Spaltleckage vermindert die Strömungsverluste, was zu einer Wirkungsgradsteigerung führt. Gleichzeitig sind die Nachteile der Statoren weniger stark ausgeprägt, was in verminderten Schwingungsanregungen der stromabwärts angeordneten Rotoren resultiert.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Auch wird hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Strukturbaugruppe für einen Verdichter einer Strömungsmaschine, die aufweist:
- einen Stator (5) mit einer Mehrzahl von Leitschaufeln (50), die sich in einem Strömungspfad (25) der Strömungsmaschine erstrecken, wobei die Leitschaufeln (50) eine Drechachse (70) aufweisen und in ihrem Staffelungswinkel einstellbar ausgebildet sind,
- eine innere Strömungspfadberandung (950), die den Strömungspfad (25) durch die Strömungsmaschine radial innen begrenzt, und
- eine äußere Strömungspfadberandung (410), die den Strömungspfad (25) durch die Strömungsmaschine radial außen begrenzt,
- wobei die Leitschaufeln (50) erste Teilspalte (81) zur äußeren Strömungspfadberandung (410) und/oder zweite Teilspalte (82) zur inneren Strömungspfadberandung (950) aufweisen,
**dadurch gekennzeichnet,**
**dass** die Leitschaufeln (50) derart angeordnet und ausgebildet sind, dass die Drehachsen (70) der Leitschaufeln (50) eine kombinierte Neigung sowohl zur Axialrichtung (x) als auch in Umfangsrichtung (ϕ) aufweisen.

2. Strukturbaugruppe nach Anspruch 1, **dadurch gekennzeichnet, dass** die Drehachsen (70) der Leitschaufeln (50) des Stators (5) in Umfangsrichtung (ϕ) derart geneigt sind, dass ihre jeweiligen radial nach innen gerichteten Verlängerungen sich nicht in einem Punkt der Statorachse (9) schneiden, nämlich ihre jeweiligen radial nach innen gerichteten Verlängerungen tangential an einem Kreis (96) anliegen, der sich in einer Schnittebene senkrecht zur Statorachse (9) um die Statorachse (9) erstreckt.

3. Strukturbaugruppe nach Anspruch 1 oder 2, **dadurch gekennzeichnet, dass** die Neigung der Drehachsen (70) der Leitschaufeln (50) sowohl zur Axialrichtung (x) als auch in Umfangsrichtung (ϕ) dahingehend optimiert ist, dass ein vorgegebener Minimalspalt bei allen einstellbaren Staffelungswinkeln beim ersten Teilspalt (81) und/oder beim zweiten Teilspalt (82) nicht unterschritten wird.

4. Strukturbaugruppe nach Anspruch 3, **dadurch gekennzeichnet, dass** die Neigung der Drehachsen (70) der Leitschaufeln (50) sowohl zur Axialrichtung (x) als auch in Umfangsrichtung (ϕ) dahingehend optimiert ist, dass bei allen einstellbaren Staffelungswinkeln der erste Teilspalt (81) und/oder der zweite Teilspalt (829 einen Minimalabstand zur angrenzenden Strömungspfadberandung (410, 950) einhält.

5. Strukturbaugruppe nach einem der vorangehenden Ansprüche, **dadurch gekennzeichnet, dass** die Drehachsen (70) in positiver Richtung in Umfangsrichtung (ϕ) geneigt sind.

6. Strukturbaugruppe nach einem der Ansprüche 1 bis 4, **dadurch gekennzeichnet, dass** die Drehachsen (70) in negativer Richtung in Umfangsrichtung (ϕ) geneigt sind.

7. Strukturbaugruppe nach einem der vorangehenden Ansprüche, **dadurch gekennzeichnet, dass** die Drehachsen (70) um einen Verkippungswinkel im Bereich zwischen 0° und ± 10° in Umfangsrichtung verkippt sind.

8. Strukturbaugruppe nach einem der vorangehenden Ansprüche, **dadurch gekennzeichnet, dass** die Drehachsen (70) stromaufwärtes zur axialen Richtung (x) geneigt sind.

9. Strukturbaugruppe nach einem der Ansprüche 1 bis 7, **dadurch gekennzeichnet, dass** die Drehachsen (70) stromabwärts zur axialer Richtung geneigt sind.

10. Strukturbaugruppe nach einem der vorangehenden Ansprüche, **dadurch gekennzeichnet, dass** die Drehachsen (70) um einen Verkippungswinkel im Bereich zwischen 0° und ± 10° zur axialen Richtung verkippt sind.

11. Strukturbaugruppe nach einem der vorangehenden Ansprüche, **dadurch gekennzeichnet, dass** die Teilspalte (81, 82) im Bereich der Vorderkante (51) und/oder im Bereich der Hinterkante (52) der Leitschaufeln (50) angrenzend an die jeweilige Strömungspfadberandung (410, 950) ausgebildet sind.

12. Strukturbaugruppe nach einem der vorangehenden Ansprüche, **dadurch gekennzeichnet, dass** die Leitschaufeln (50) im Bereich der Hinterkante (52) angrenzend an die radial äußere Strömungspfadberandung (410) und/oder angrenzend an die radial innere Strömungspfadberandung (950) einen Rückschnitt (53, 54) derart aufweisen, dass sie im Bereich der Hinterkante (52) einen Teilspalt (81, 82) zur angrenzenden Strömungspfadberandung (410, 950) ausbilden.

13. Strukturbaugruppe nach einem der vorangehenden Ansprüche, **dadurch gekennzeichnet, dass** die Leitschaufeln (50) im Bereich der Vorderkante angrenzend an die radial äußere Strömungspfadberandung (410) und/oder angrenzend an die radial innere Strömungspfadberandung (950) einen Rückschnitt derart aufweisen, dass sie im Bereich der Vorderkante (51) einen Teilspalt zur angrenzenden Strömungspfadberandung (410, 950) ausbilden.

14. Strukturbaugruppe nach Anspruch 12 oder 13, **dadurch gekennzeichnet, dass** die Drehachsen (70) der Leitschaufeln (50) des Stators (5) in Umfangsrichtung derart sowohl zur Axialrichtung (x) als auch in Umfangsrichtung (ϕ) kombiniert geneigt sind, dass der obere Eckpunkt (55), an dem die Vorderkante (51) und der Rückschnitt an der Schaufelspitze oder die Hinterkante (52) und der Rückschnitt (53) an der Schaufelspitze zusammenlaufen, und/oder der untere Eckpunkt (56), an dem die Vorderkante (51) und der Rückschnitt am Schaufelfuß oder die Hinterkante (52) und der Rückschnitt (54) am Schaufelfuß zusammenlaufen, bei einer Verstellung des Staffelungswinkels eine Kreistrajektorie (T1, T2) beschreiben, die lokal senkrecht zur angrenzenden Strömungspfadberandung (410, 950) ausgerichtet ist.

15. Strukturbaugruppe nach Anspruch 14, **dadurch gekennzeichnet, dass** der Abstand eines Eckpunkts (55, 56) zur angrenzenden Strömungspfadberandung (410, 950) bei jedem eingestellten Staffelungswinkel im Wesentlichen konstant ist.
